# EUROPEAN PATENT APPLICATION

(11) **EP 1 210 893 A2**
(43) Date of publication of application: **05.06.2002**
(21) Application number: 01309603.7
(22) Date of filing: 14.11.2001
(51) Int. Cl.: A47J 31/46, A47J 31/40, A47J 31/36

(54) **Beverage extracting apparatus**

(30) Priority: 01.12.2000 JP 2000367113; 01.12.2000 JP 2000367119
(71) Applicant: Sanden Corporation, Isesaki-shi, Gunma 372-8502 (JP)
(72) Inventor: Nagasawa, Takashi, Isesaki-cho, Gunma 372-8502 (JP)
(74) Representative: Haley, Stephen

(57) **Abstract**

The present invention relates to a beverage extracting apparatus (10) capable of selectively generating regular coffee and espresso coffee by one apparatus and fine adjusting both of clearness of the regular coffee and a generation of crema of the espresso coffee. The regular coffee is generated by supplying hot water in a cylinder (11) and extracting concentrate solution, and espresso coffee is generated by supplying hot water and steam in the cylinder (11) and extracting concentrate solution. At that time, concentrate solution extracting pressure in the cylinder (11) can be substantially generated by applying a resistance to passage of fluid to the contracted diameter portion (20) at the part of an extracted concentrate solution discharge pass (15). This resistance is constant independently of the kind, grain size or the like of the raw material when a pressurizing force is constant, which allows the concentrate solution extracting pressure to be precisely adjusted.

## Description

The present invention relates to a beverage extracting apparatus mounted on a cup-type beverage vending machine.

### DESCRIPTION OF THE RELATED ART

A cup-type beverage vending machine has been known in the past which extracts concentrate coffee solution from a raw ground coffee bean material and hot water or steam by a beverage extracting apparatus, and serves to users the concentrate coffee solution poured into a cup as it is or with sugar, milk or the like added. Known as the beverage extracting apparatuses are a regular coffee extractor for extracting concentrate regular coffee solution with hot water, and an espresso coffee extractor for extracting concentrate espresso coffee solution having fine foam called crema with steam.

The regular coffee extractor comprises a cylinder, a piston capable of sealing a top opening of the cylinder, a filter made of paper or the like for covering a bottom opening of the cylinder, a filter block lifted and brought into close contact with a bottom of the cylinder to support the filter during vending operation, an extracted concentrate solution discharge pipe extending from the filter block, and a hot water pump, and is adapted in such a manner that a raw material is charged into the cylinder, that the top opening of the cylinder is sealed by the piston, and then that the hot water is supplied into the cylinder in a pressurizing manner at a constant pressure by the hot water pump, whereby the concentrate regular coffee solution is percolated and extracted to the filter block side from the raw material and hot water through the filter. The extracted concentrate solution is then fed to a mixing bowl, cup or the like in a next step through the extracted concentrate solution discharge pipe.

The espresso coffee extractor comprises a cylinder, piston, filter, filter block, extracted concentrate solution discharge pipe, and also steam pump, and is adapted in such a manner that a top opening of the cylinder into which a raw material is charged is sealed, and then that the steam is supplied into the cylinder in a pressurizing manner at a constant pressure by the steam pump, whereby the concentrate espresso coffee solution is percolated and extracted from the raw material and steam.

A pressure applied to the raw material in the cylinder when extracting the concentrate solution (concentrate solution extracting pressure) is comparatively low in the regular coffee extractor to thereby extract clear concentrate regular coffee solution without foam. In the espresso coffee extractor, the concentrate solution extracting pressure is increased by the steam to thereby generate concentrate espresso coffee solution with crema.

Also known is an espresso coffee extractor which generates regular coffee by adding hot water to extracted concentrate espresso coffee solution.

However, the conventional regular coffee extractor described above cannot generate espresso coffee with crema, and when the regular coffee is generated by the espresso coffee extractor, the crema persists even if the hot water is added to the espresso coffee with the crema, and thus clear regular coffee cannot be obtained. For this reason, selectively serving the clear regular coffee and espresso coffee with crema requires providing the beverage vending machine with both of the regular coffee extractor and espresso coffee extractor, causing an increase in cost.

In the above described beverage extracting apparatus, an inner pressure of the cylinder generated when extracting the concentrate solution (concentrate solution extracting pressure) depends on percolation property of the filter, that is, percolation resistance of the filter (hereinafter referred to as "filter resistance") when a pressurizing force on a pressurizing means side such as pumping power, an amount of hot water supply or the like is made constant. However, the filter resistance is unstable and greatly changes depending on a kind or grain size of the raw material even under the constant pressurizing force, concurrently causing a great change of the concentrate solution extracting pressure. Therefore, the concentrate solution extracting pressure cannot be precisely made constant or precisely adjusted, and thus clearness of the regular coffee and a generation amount of crema of the espresso coffee cannot be fine adjusted.

The present invention is achieved in view of the above problems and has its object to provide a beverage extracting apparatus which is capable of selectively generating regular coffee and espresso coffee by one apparatus and fine adjusting both of clearness of the regular coffee and a generation amount of crema of the espresso coffee.

In order to attain the object, there is provided a beverage extracting apparatus according to the invention, including: a cylinder into which a raw material is charged; a filter for covering a bottom opening of the cylinder; a filter block brought into close contact with a bottom of the cylinder to support the filter; and hot water supply means for supplying hot water in the cylinder, the hot water being supplied in the cylinder into which the raw material is charged to pressurize an inside of the cylinder, thereby extracting concentrate solution percolated through the filter to an extracted concentrate solution discharge passage provided on the filter block, wherein there is provided a contracted diameter portion where an inside diameter is contracted at part of the extracted concentrate solution discharge passage for generating an concentrate solution extracting pressure in the cylinder by resistance to passage of fluid of the contracted diameter portion, and there is provided steam supply means for supplying steam in the cylinder to selectively introduce the hot water or hot water and steam in the cylinder.

According to the invention, the regular coffee is generated by supplying the hot water in the cylinder and extracting concentrate solution, and the espresso coffee is generated by supplying the hot water and steam in the cylinder and extracting concentrate solution. At that time, part of the extracted concentrate solution discharge passage is contracted by the contracted diameter portion, to which the resistance to the passage of fluid is applied, and thus the resistance of the contracted diameter portion rather than filter resistance permits the concentrate solution extracting pressure to be substantially generated in the cylinder. The resistance of the contracted diameter portion is constant independently of the kind, grain size or the like of the raw material when a pressurizing force on a pressurizing means side is constant, which allows the concentrate solution extracting pressure to be precisely made constant or to be precisely adjusted by regulating the pressurizing force or the like, permitting fine adjustment of both of clearness of the regular coffee and a generation amount of crema of the espresso coffee.

In another configuration of the invention, there is provided opening adjustment means capable of adjusting opening of the contracted diameter portion.

Thereby, adjusting the opening of the contracted diameter portion by the opening adjustment means permits easy adjustment of the concentrate solution extracting pressure without regulating any pressurizing force on the pressurizing means side, allowing the regular coffee and espresso coffee to be selectively generated.

In further configuration of the invention, there is provided hot water pump control means capable of changing a supply amount of hot water into the cylinder by the hot water pump per unit hour.

Thereby, adjusting the amount of hot water from the hot water pump into the cylinder per unit hour by the hot water pump control means when extracting the concentrate solution permits the concentrate solution extracting pressure in the cylinder to be changed and permits the clear regular coffee and espresso coffee with crema to be selectively generated.

In the Drawings;
FIG. 1 is a partially sectional side view of a beverage extracting apparatus according to a first embodiment of the invention;
FIG. 2 is a longitudinal section view of a contracted diameter member;
FIG. 3 is a longitudinal sectional view of another contracted diameter member;
FIG. 4 is a sectional view taken along a line A-A of FIG. 3;
FIG. 5 is a longitudinal sectional view of still another contracted diameter member;
FIG. 6 is a longitudinal sectional view of yet another contracted diameter member;
FIG. 7 is a partially sectional side view of a beverage extracting apparatus according to a second embodiment of the invention;
FIG. 8 is a block diagram of a control system of a hot water pump; and
FIG. 9 is a flowchart of control operation of the hot water pump.

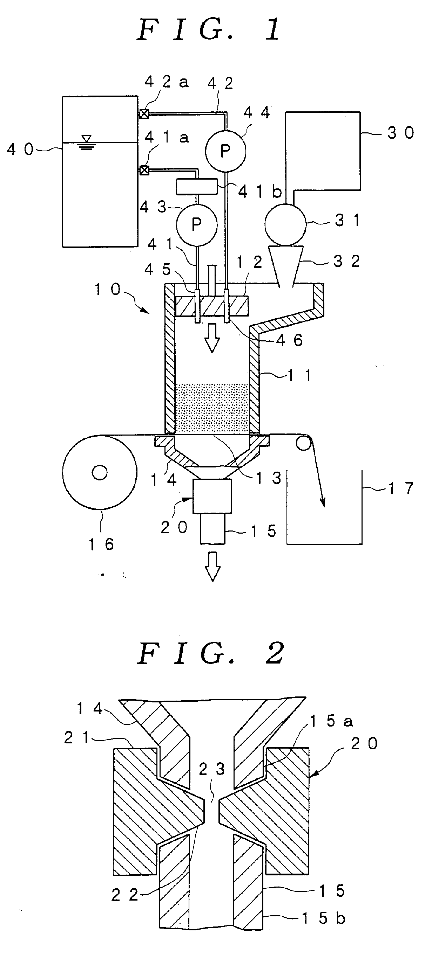

FIGS. 1 and 2 show a first embodiment of the invention.

A beverage extracting apparatus 10 shown in the drawings is mounted on a cup-type beverage vending machine (not shown) and capable of selectively generating concentrate regular coffee solution and concentrate espresso coffee solution. The beverage extracting apparatus 10 comprises a cylinder 11 (not cylindrical at the top) into which an original ground coffee bean material and hot water or the like are introduced, a piston 12 capable of sealing a top opening of the cylinder 11, a zonal filter 13 made of paper for covering a bottom opening of the cylinder 11, a filter block 14 lifted and brought into close contact with a bottom of the cylinder 11 to support the filter 13 during vending operation, an extracted concentrate solution discharge pipe (hereinafter simply referred to as "discharge pipe") 15 extending from the filter block 14, a filter supply roller 16 for supplying a new using surface of the filter 13 under the cylinder 11 every time of vending operation, and a waste container 17 in which used surfaces of the filter 13 and raw material residues are disposed of.

The discharge pipe 15 is provided with a contracted diameter member 20 described below. The contracted diameter member 20 comprises, as shown in a longitudinal section in FIG. 2, a cylindrical outside diameter portion 21 and a contracted diameter portion 22 extending diametrically inward from the outside diameter portion 21, and the contracted diameter portion 22 forms a contracted diameter hole 23 which locally contracts an inside diameter of the discharge pipe 15. In the contracted diameter member 20, a discharge pipe 15a on a filter block 14 side and a discharge pipe 15b on a downstream side are connected like a coupler.

The beverage extracting apparatus 10 also comprises a raw material canister 30 which accommodates coffee beans, a coffee mill 31 for grinding the coffee beans, and a raw material chute 32 for charging the raw ground bean material into the cylinder 11, the top of the cylinder 11 being partly horizontally enlarged and communicating with the raw material chute 32.

The beverage extracting apparatus 10 is provided with a hot water tank 40 which stores hot water at approximately 95 °C. The hot water tank 40 stores not only the hot water but also steam generated from the hot water to serve as a supply source of the hot water and steam. The hot water in the hot water tank 40 is adapted to be supplied in the cylinder 11 through a hot water supply pipe 41, which is provided with a hot water supply electromagnetic valve 41a and hot water pump 43 and connected to a hot water nozzle 45 at a downstream end thereof. The hot water supply pipe 41 is also provided with a hot water storage bowl 41b for temporarily storing a predetermined amount of hot water to be supplied in the cylinder 11. The steam in the hot water tank 40 is adapted to be supplied in the cylinder 11 through a steam supply pipe 42, which is provided with a steam supply electromagnetic valve 42a and steam pump 44 and connected to a steam nozzle 46 at a downstream end thereof. Both of the hot water nozzle 45 and steam nozzle 46 are mounted to and penetrate the piston 12 so that the piston 12 is sealed off.

Now, steps of extracting concentrate regular coffee solution by the beverage extracting apparatus 10 will be described. First, when a selection button for regular coffee (not shown) is pushed by a user, a predetermined amount of coffee beans are transferred from the raw material canister 30 to the coffee mill 31, where the coffee beans are ground, and the raw ground bean material is charged into the cylinder 11 from a top opening of the cylinder 11 in an opened condition through the raw material chute 32. Then, the piston 12 is lowered to seal off the top opening of the cylinder 11. Next, the hot water supply electromagnetic valve 41a is opened for a predetermined time, and a predetermined amount of hot water is fed from the hot water tank 40 to the hot water pump 43. At this time, the predetermined amount of hot water is once stored in the hot water storage bowl 41b from the hot water tank 40, and then fed to the hot water pump 43. The hot water pump 43 supplies the hot water into the cylinder 11 in a pressurizing manner at a constant pressure through the hot water nozzle 45. Thus, an inner pressure of the cylinder 11 is increased, and the concentrate regular coffee solution is percolated from the raw ground bean material and hot water through the filter 13 and extracted to the filter block 14 side.

In operation of the hot water pump 43, that is, in an initial step of concentrate solution extraction, the inner pressure of the cylinder 11 is increased by filter resistance. However, when fluid having passed through the filter 13 (air or extracted concentrate solution having been present in the cylinder 11) reaches the contracted diameter hole 23 of the contracted diameter member 20 in the discharge pipe 15, the contracted diameter hole 23 serves as resistance to passage of fluid (hereinafter referred to as "contracted diameter resistance"). This increases an inner pressure on the filter block 14 side, which increases the inner pressure of the cylinder 11 further than the filter resistance increases to generate an concentrate solution extracting pressure in the cylinder 11. Thus, the filter resistance contributes little to the increase in the inner pressure of the cylinder 11, and the concentrate solution extracting pressure is substantially generated by the contracted diameter resistance. Therefore, the filter 13 exclusively performs a percolating function.

The contracted diameter resistance becomes constant regardless of a kind or grain size of the raw material under a constant pressurizing capacity and a constant amount of hot water supply of the hot water pump 43, resulting in a precisely constant concentrate solution extracting pressure, and thus regulating capacity of the hot water pump 43 or the like permits a desired concentrate solution extracting pressure to be generated. In the beverage extracting apparatus 10, an area of the filter 13, specifically, an area of the bottom opening of the cylinder 11 is enlarged to be larger than in a conventional apparatus to reduce contribution of the filter resistance to the increase in the inner pressure of the cylinder 11, in order to increase a pressure increasing action of the cylinder 11 by the contracted diameter resistance.

The concentrate regular coffee solution percolated through the filter 13 is fed to a mixing bowl (not shown) or the like in a next step through the discharge pipe 15, and during the time, the concentrate regular coffee solution passes through the contracted diameter hole 23, causing the pressure to be reduced and to be gradually returned to an atmospheric pressure.

In the beverage extracting apparatus 10, the raw material is charged into the cylinder 11, the top opening of which is sealed by the piston 12, and the hot water pump 43 and steam pump 44 are operated to supply hot water and steam in the cylinder 11, thereby extracting the concentrate espresso coffee solution. Also in this case, the concentrate solution extracting pressure can be precisely made constant or adjusted as described above, permitting a generation amount of crema to be adjusted as desired.

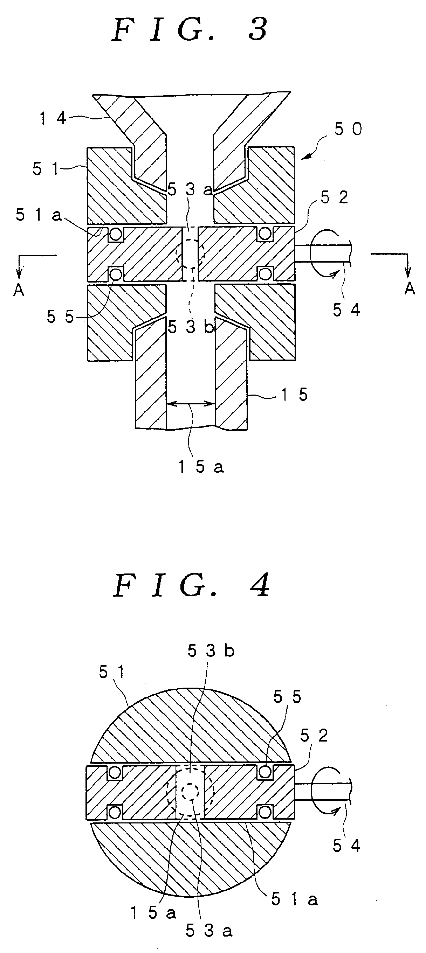

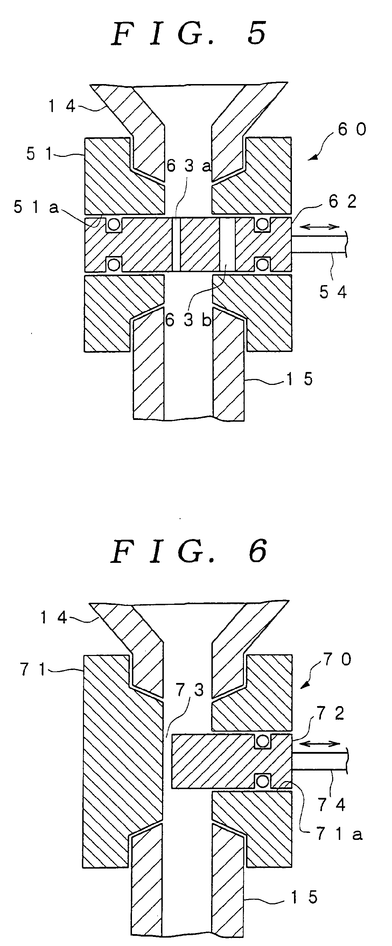

FIG. 3 shows another example of a contracted diameter member, and the same reference numerals are used for denoting portions in common with the above described embodiment, and descriptions thereof will be omitted. The same applies to FIGS. 5 and 6 described below.

A contracted diameter member 50 shown in the drawing comprises a body 51 like a substantially cylindrical coupler provided on a discharge pipe 15, and a cylindrical valve 52 rotatably accommodated in a lateral hole 51a which diametrically penetrates the body 51 as described below. An inside diameter of the body 51 coincides with an inside diameter 15a of the discharge pipe 15, and a diameter of the valve 52 is slightly larger than the inside diameter 15a of the discharge pipe 15. In the center of the valve 52, a first contracted diameter hole 53a and second contracted diameter hole 53b orthogonal to each other are provided so as to respectively diametrically penetrate the valve 52. Both of the first and second contracted diameter holes 53a, 53b have diameters smaller than the inside diameter 15a of the discharge pipe 15, and the diameter of the first contracted diameter hole 53a is set smaller than the diameter of the second contracted diameter hole 53b. Specifically, the contracted diameter member 50 serves as opening adjustment means for selectively passing concentrate solution through the first contracted diameter hole 53a or second contracted diameter hole 53b as desired.

In FIGS. 3 and 4, the valve 52 is located in a rotational position (hereinafter referred to as "first rotational position) where the first contracted diameter hole 53a is arranged along the axis of the discharge pipe 15, and in the first rotational position, the first contracted diameter hole 53a locally contracts the discharge pipe 15, generating contracted diameter resistance (hereinafter referred to as "first contracted diameter resistance"). When the valve 52 is rotated at 90° around an axis thereof in the first rotational position, the second contracted diameter hole 53b is, though not shown, arranged along the axis of the discharge pipe 15 (this rotational position of the valve 52 is hereinafter referred to as "second rotational position"), and in the second rotational position, the second contracted diameter hole 53b generates contracted diameter resistance (hereinafter referred to as "second contracted diameter resistance").

The diameter of the first contracted diameter hole 53a is smaller than the diameter of the second contracted diameter hole 53b as described above, thus when pressures of fluids passing through them are the same, the first contracted diameter resistance becomes larger than the second contracted diameter resistance. Therefore, under a constant pressurizing force on the cylinder 11, the concentrate solution extracting pressure can be higher, when the valve 52 is arranged in the first rotational position, than in the second rotational position, and lower, when the valve 52 is arranged in the second rotational position, than in the first rotational position. In this way, the contracted diameter member 50 can simply and precisely adjust the concentrate solution extracting pressure without regulating a pressurizing side such as the hot water pump 43 or steam pump 44. This permits, for example, generating the espresso coffee with crema by increasing the concentrate solution extracting pressure, and generating the clear regular coffee by reducing the concentrate solution extracting pressure from the same raw material.

The rotational position of the valve 52 can be controlled by a motor (not shown) in accordance with selected beverage, and an output of the motor is transmitted to the valve 52 via a drive transmitting portion 54. Seal rings 55 are mounted to a peripheral surface of the valve 52.

In the contracted diameter member 50, the diameter of the contracted diameter hole is changed by rotating the valve 52, but like a contracted diameter member 60 shown in FIG. 5, the diameter of the contracted diameter hole may be changed by moving a valve 62 along a lateral hole 51a. In FIG. 5, portions in common with FIG. 3 are denoted with the same reference numerals.

Specifically, in the valve 62 shown in the drawing, a first contracted diameter hole 63a with a small diameter and a second contracted diameter hole 63b with a large diameter are provided so as to be spaced axially of the valve 62 and be parallel with each other along an axis of a discharge pipe 15. Thus, the valve 62 is laterally slid by a solenoid or the like via a drive transmitting portion 54 to set the first contracted diameter hole 63a or second contracted diameter hole 63b as a hole for generating contracted diameter resistance, permitting the concentrate solution extracting pressure in the cylinder 11 to be adjusted. The valve 62 may be provided, though not shown, with a further contracted diameter hole with a different diameter other than the first and second contracted diameter holes 63a, 63b to increase freedom of adjustment of the concentrate solution extracting pressure.

FIG. 6 shows a still another contracted diameter member. A contracted diameter member 70 shown in the drawing comprises a body 71 like a cylindrical coupler, and a cylindrical valve 72 accommodated in a lateral hole 71a provided at one of radial portions of the body 71. The valve 72 is laterally moved to change projection of the valve 72 in a discharge pipe 15, permitting flexible adjustment of opening of a contracted diameter hole 73 which contracts the discharge pipe 15. This allows an concentrate solution extracting pressure in a cylinder 11 to be freely set to a desired value. As moving methods of the valve 72, sliding like the moving method of the valve 62 in FIG. 5 may be used, and also, a male screw and female screw may be provided on an inner peripheral surface of the lateral hole 71a and outer peripheral surface of the valve 72 to rotate the valve 72 by a motor or the like via a drive transmitting portion 74 for lateral movement of the valve 72.

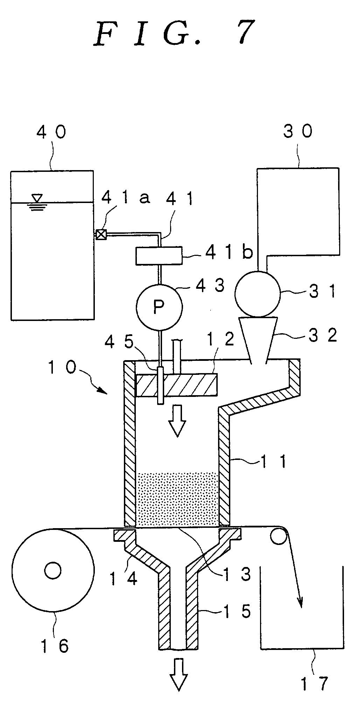

FIGS. 7 to 9 relate to a second embodiment of the invention, and the same components as in the first embodiment will be denoted with the same reference numerals. A beverage extracting apparatus 10 in this embodiment comprises no steam pump or the like as steam supply means unlike the first embodiment.

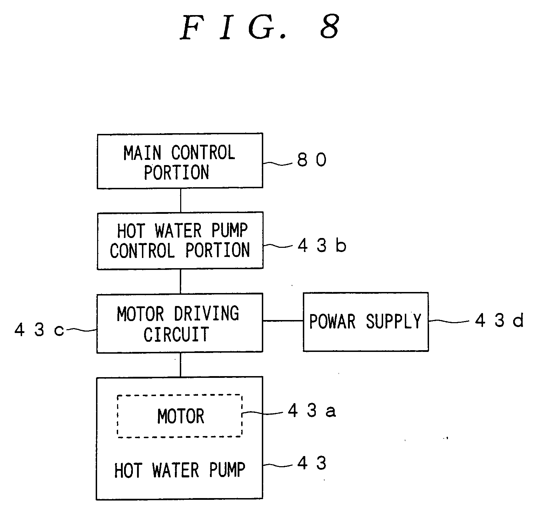

As shown in FIG. 8, a hot water pump 43 has a pump driving motor (hereinafter simply referred to as "motor") 43a, which is subjected to ON/OFF control and rotation number control described below based on control signals from a hot water pump control portion 43b via a motor driving circuit 43c. Thus, the hot water pump control portion 43b and motor driving circuit 43c constitute hot water pump control means. The motor driving circuit 43c is connected to a power supply 43d of the motor 43a. The hot water pump control portion 43b controls the motor 43a based on a control signal from, for example, a main control portion 80 of a beverage vending machine. The main control portion 80 performs centralized control of vending, coin mechanism or the like via respective terminal control portions in the beverage vending machine.

Next, operations of the beverage extracting apparatus 10 of this embodiment will be described. Basic operations from charging the raw material to extracting beverage are the same as in the first embodiment, and thus descriptions thereof will be omitted.

In this embodiment, the inner pressure of the cylinder 11 when extracting the concentrate solution (concentrate solution extracting pressure) is selectively switched between a low pressure mode and high pressure mode as described below, permitting concentrate regular coffee solution (hereinafter referred to as "RC") to be generated by the former, and permitting concentrate espresso coffee solution (hereinafter referred to as "EC") to be generated by the latter.

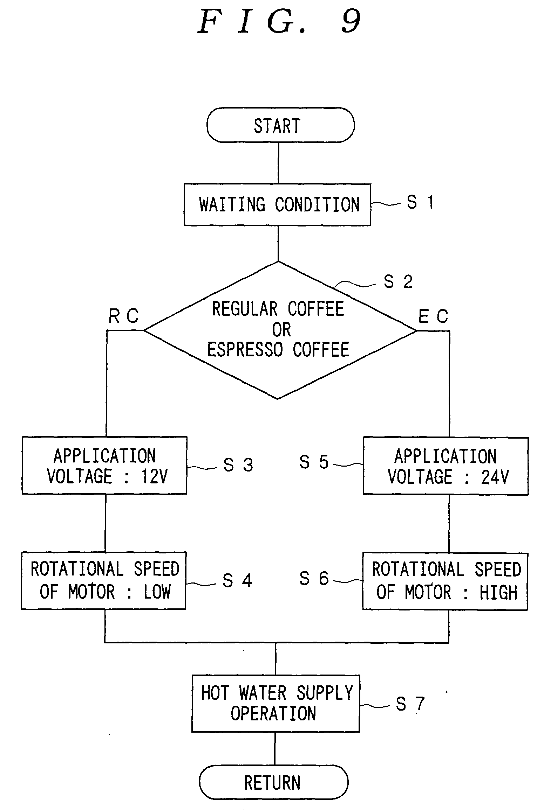

Specifically, as shown in a flowchart of FIG. 9, when RC is selected by a user (S2) in a waiting condition (S1), that is, a vending waiting condition of the hot water pump 43, a main control portion 80 sends an RC selection signal to the hot water pump control portion 43b. Thus, the hot water pump control portion 43b sets application voltage from the power supply 43d to motor 43a to 12 V via the motor driving circuit 43c (S3), and rotational speed of the motor 43a is thereby switched to a low speed mode contrary to a high speed mode described below (S4). On the other hand, when EC is selected in the step S2, the main control portion 80 sends an EC selection signal to the hot water pump control portion 43b. Thus, the hot water pump control portion 43b sets the application voltage from the power supply 43d to motor 43a to 24 V (S5), and the rotational speed of the motor 43a is thereby switched to a high speed mode (S6).

When the rotational speed of the motor 43a is in the low speed mode, a supply amount of hot water from the hot water pump 43 into the cylinder 11 per unit hour is smaller than in the high speed mode, and thus the concentrate solution extracting pressure of the cylinder 11 is switched to the low pressure mode when supplying the hot water, permitting clear RC concentrate solution to be obtained. On the other hand, when the rotational speed of the motor 43a is in the high speed mode, the supply amount of hot water from the hot water pump 43 into the cylinder 11 per unit hour is larger than in the low speed mode, and thus the concentrate solution extracting pressure of the cylinder 11 is switched to the high pressure mode when supplying the hot water, permitting EC concentrate solution with crema to be obtained. In this way, according to this embodiment, clear RC and EC with crema can be selectively generated by one beverage extracting apparatus 10.

In the above described embodiment, switch of the rotational speed of the motor 43a is carried out by changing the application voltage, but not limited to this, may be carried out by pulse control such as PWM control or other known methods. Further, as the rotational speed of the motor 43a, not only the high and low speed modes but also an intermediate mode may be set to thereby permit finer adjustment of a beverage extracting pressure and generating various extracted concentrate solution.

## Claims

1. A beverage extracting apparatus, comprising:
a cylinder into which a raw material is charged;
a filter for covering a bottom opening of the cylinder;
a filter block brought into close contact with a bottom of the cylinder to support the filter; and
hot water supply means for supplying hot water in the cylinder, the hot water being supplied in the cylinder into which the raw material is charged to pressurize an inside of the cylinder, thereby extracting concentrate solution percolated through the filter to an extracted concentrate solution discharge passage provided on the filter block,
wherein there is provided a contracted diameter portion where an inside diameter is contracted at part of said extracted concentrate solution discharge passage for generating an concentrate solution extracting pressure in the cylinder by resistance to passage of fluid of said contracted diameter portion, and
there is provided steam supply means for supplying steam in the cylinder to selectively introduce the hot water or hot water and steam in the cylinder.

2. A beverage extracting apparatus, comprising:
a cylinder into which a raw material is charged;
a filter for covering a bottom opening of the cylinder;
a filter block brought into close contact with a bottom of the cylinder to support the filter; and
hot water supply means for supplying hot water in the cylinder, the hot water being supplied in the cylinder into which the raw material is charged to pressurize an inside of the cylinder, thereby extracting concentrate solution percolated through the filter to an extracted concentrate solution discharge passage provided on the filter block,
wherein there is provided a contracted diameter portion where an inside diameter is contracted at part of said extracted concentrate solution discharge passage for generating an concentrate solution extracting pressure in the cylinder by resistance to passage of fluid of said contracted diameter portion,
and there is provided opening adjustment means capable of adjusting opening of said contracted diameter portion.

3. The beverage extracting apparatus according to claim 2, wherein said opening adjustment means comprises a contracted diameter member which has a plurality of holes with different openings of the contracted diameter portions and is capable of selecting a hole through which the concentrate solution passes as desired.

4. A beverage extracting apparatus, comprising:
a cylinder into which a raw material is charged;
a filter for covering a bottom opening of the cylinder; and
a hot water pump for supplying hot water in the cylinder, the hot water being supplied in the cylinder into which the raw material is charged to pressurize an inside of the cylinder, thereby percolating and extracting concentrate solution through the filter,
wherein there is provided hot water pump control means capable of changing a supply amount of hot water into the cylinder by a hot water pump per unit hour.

5. The beverage extracting apparatus according to claim 3, wherein said hot water pump control means controls rotational speed of a pump driving motor of the hot water pump.
